# EUROPÄISCHE PATENTANMELDUNG

(11) **EP 4 550 607 A1**
(43) Veröffentlichungstag der Anmeldung: **07.05.2025**
(21) Anmeldenummer: 24208043.0
(22) Anmeldetag: 22.10.2024
(51) Int. Cl.: H02J 3/38

(54) **VERFAHREN ZUR KLASSIFIZIERUNG VON DEZENTRALEN ENERGIERESSOURCEN ZUR STEUERUNG EINES STROMNETZES**

(30) Priorität: 03.11.2023 DE 102023210923
(71) Anmelder: Siemens Aktiengesellschaft, 80333 München (DE)
(72) Erfinder: Derzbach, Robin, 63755 Alzenau (DE); Sudhoff, Robin, 45133 Essen (DE); Duckheim, Mathias, 91052 Erlangen (DE); Schreck, Sebastian, 90429 Nürnberg (DE); Thiem, Sebastian, 91413 Neustadt an der Aisch (DE)
(74) Vertreter: Siemens Patent Attorneys

(57) **Zusammenfassung**

Es wird ein Verfahren zur Klassifizierung von dezentralen Energieressourcen (42') innerhalb eines Stromnetzes (1) vorgeschlagen, wobei die Klassifizierung für eine Steuerung des Stromnetzes (1) vorgesehen ist, wobei die Klassifizierung mehrere festgelegte Klassen (42) aufweist, die mit der technischen Art der jeweiligen dezentralen Energieressource (42') assoziiert sind, und die Klassifizierung durch eine Ermittlung einer Zugehörigkeit der jeweiligen Energieressource (42') zu einer der Klassen (42) erfolgt, wobei für jede der Energieressourcen (42') eine mit der jeweiligen Energieressource (42') assoziierte Lastreihe (41) bereitgestellt wird. Das Verfahren ist gekennzeichnet dadurch, dass das Ermitteln der Zugehörigkeit zu einer der Klassen (42) mittels eines künstlichen neuronalen Netzes erfolgt, wobei das künstliche neuronale Netz dazu ausgebildet und trainiert ist, jeweils eine der Lastreihen (41) als Eingabedaten zu verwenden, und aus den Eingabedaten die Zuordnung der jeweiligen als Eingabe verwendeten Lastreihe (41) zu einer der Klassen (42) als Ausgabedaten zu ermitteln.

Weiterhin betrifft die Erfindung ein Verfahren zur Steuerung eines Stromnetzes (1) sowie ein Computerprogrammprodukt.

## Beschreibung

Die Erfindung betrifft ein Verfahren gemäß dem Oberbegriff des Patentanspruches 1, ein Verfahren gemäß dem Oberbegriff des Patentanspruches 11 sowie ein Computerprogrammprodukt gemäß dem Oberbegriff des Patentanspruches 14.

Eine zunehmende Verbreitung verteilter dezentraler Energieressourcen (englisch: Decentralized-Energy-Resources; DERs), beispielsweise von Photovoltaikanlagen, Elektrofahrzeugen, Wärmepumpen und Batteriespeicher, führt zu erheblichen technischen Herausforderungen für Verteilnetze beziehungsweise Stromnetze.

Das ist deshalb der Fall, da Verteilnetze typischerweise für einen unidirektionalen Stromfluss von zentralen Erzeugern zu dezentralen Verbrauchern und nicht für die Bewältigung der durch DERs verursachten bidirektionalen Stromflüsse ausgelegt sind. Die hohe Durchdringung von DERs kann zu Spannungsstörungen, thermischer Überlastung und einer Gefährdung der Netzstabilität führen.

Zur Bewältigung der genannten technischen Herausforderungen ist es erforderlich den Standort und die Verfügbarkeit von flexiblen Anlagen innerhalb des Stromnetzes zu ermitteln. Das ist deshalb von Vorteil, da diese typischerweise Hilfsdienste, wie beispielsweise eine Frequenzregulierung, eine Spannungsunterstützung oder eine Lastverschiebung zur Unterstützung des Netzbetriebs bereitstellen können.

Typischerweise liegen jedoch unvollständige Informationen, beispielsweise über die technische Art, den Standort innerhalb des Stromnetzes oder die Leistung von installierten flexiblen Anlagen beziehungsweise DERs vor.

Nach dem Stand der Technik erfolgt die Identifizierung beziehungsweise Klassifizierung von solchen flexiblen Anlagen (DERs) manuell, das heißt diese basieren auf manuellen Erhebungen, behördlich vorgeschriebenen Meldungen über Anlageninstallationen oder Schätzungen. Die genannten manuellen Verfahren sind zeitintensiv, fehleranfällig und kostenintensiv. Dies kann zu einer fehlerhaften Planung und Umsetzung von Netzverstärkungen oder Digitalisierungsmaßnahmen führen.

Der vorliegenden Erfindung liegt die Aufgabe zugrunde, ein Verfahren für eine Identifizierung von dezentralen Energieressourcen, insbesondere von flexiblen Anlagen, innerhalb eines Stromnetzes bereitzustellen und basierend darauf einen verbesserten Betrieb des Stromnetzes zu ermöglichen.

Die Aufgabe wird durch ein Verfahren mit den Merkmalen des unabhängigen Patentanspruches 1, durch ein Verfahren mit den Merkmalen des unabhängigen Patentanspruches 11 sowie durch eine Vorrichtung mit den Merkmalen des unabhängigen Patentanspruches 14 gelöst. In den abhängigen Patentansprüchen sind vorteilhafte Ausgestaltungen und Weiterbildungen der Erfindung angegeben.

Das erfindungsgemäße Verfahren zur Klassifizierung beziehungsweise Identifizierung von dezentralen Energieressourcen innerhalb eines Stromnetzes, wobei die Klassifizierung für eine Steuerung des Stromnetzes vorgesehen ist, wobei die Klassifizierung mehrere festgelegte Klassen aufweist, die mit der technischen Art der jeweiligen dezentralen Energieressource assoziiert sind, und die Klassifizierung durch eine Ermittlung einer Zugehörigkeit der jeweiligen Energieressource zu einer der Klassen erfolgt, wobei für jede der Energieressourcen eine mit der jeweiligen Energieressource assoziierte Lastreihe bereitgestellt wird, ist gekennzeichnet dadurch, dass das Ermitteln der Zugehörigkeit zu einer der Klassen mittels eines künstlichen neuronalen Netzes erfolgt, wobei das künstliche neuronale Netz dazu ausgebildet und trainiert ist, jeweils eine der Lastreihen als Eingabedaten zu verwenden, und aus den Eingabedaten die Zuordnung der jeweiligen als Eingabe verwendeten Lastreihe zu einer der Klassen als Ausgabedaten zu ermitteln.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Dezentralen Energieressourcen (DERs) sind insbesondere flexible Anlagen (englisch: Flexible Assets). Flexible Anlagen ermöglichen, zumindest grundsätzlich, eine zeitliche Verschiebung ihres Betriebs und/oder eine Anpassung ihrer Leistung bezüglich Erzeugung und/der Verbrauch. Weiterhin sind DERs insbesondere erneuerbare dezentrale Energieressourcen.

Eine Identifizierung von DERs ist äquivalent zur genannten Klassifizierung der DERs, da die Klassen wenigstens mit der technischen Art der jeweiligen Anlage assoziiert sind. Beispielsweise umfasst die Klassifizierung die Klasse der Photovoltaikanlagen, die Klasse der Wärmepumpen, die Klasse der Ladestationen für elektrische Fahrzeuge sowie die Klasse der Batteriespeicher. Die Klassifizierung kann weiterhin die Klasse der nicht identifizierten, das heißt nicht klassifizierbaren DERs umfassen.

Die Klassifizierung der DERs ist für eine Steuerung und/oder Regelung des Stromnetzes vorgesehen. Sie dient somit der erfindungsgemäßen Steuerung/Regelung des Stromnetzes.

Das Stromnetz ist insbesondere als Mittelspannungsnetz und/oder Niederspannungsnetz ausgebildet.

Eine Lastreihe ist eine zeitabhängige Leistung, die sich auf Erzeugung (Einspeisung in das Stromnetz) und/oder Verbrauch (Ausspeisung aus dem Stromnetz) beziehen kann und die als Zeitreihe diskret oder kontinuierlich als Funktion vorliegen kann. Typsicherweise liegt die Lastreihe als Zeitreihe mit 15 Minutenschritten vor.

Unter dem Begriff des neuronalen Netzes wird ein künstliches neuronales Netz verstanden.

Gemäß dem erfindungsgemäßen Verfahren werden eine oder mehrere DERs innerhalb des Stromnetzes durch die genannte Klassifizierung identifiziert. Hierbei ist eine Identifizierung aller DERs nicht erforderlich. Diese kann jedoch vorgesehen sein. Die Klassifizierung erfolgt gemäß mehrerer Klassen, die wenigstens mit der technischen Art der Anlage, das heißt mit der technischen Art der DERs assoziiert sind. Es wird jede dezentrale Energieressource einer der Klassen zugeordnet und somit ihre technische Art beziehungsweise ihre technische Ausgestaltung identifiziert.

Gemäß der Erfindung erfolgt die Klassifizierung und somit die Identifizierung mittels eines künstlichen neuronalen Netzes. Hierbei ist das künstliche neuronale Netz dazu ausgebildet und trainiert, jeweils eine der Lastreihen als Eingabedaten zu verwenden, und aus den Eingabedaten die Zuordnung der jeweiligen als Eingabe verwendeten Lastreihe zu einer der Klassen als Ausgabedaten zu ermitteln.

Mit anderen Worten wird eine Lastreihe einer noch nicht klassifizierten DER dem künstlichen neuronalen Netz als Eingabe zugeführt. Das künstliche neuronale Netz ist derart ausgebildet und trainiert, dass dieses aus der Eingabe, das heißt der Lastreihe, die Klasse der DER ermittelt und somit diese identifiziert. Mit anderen Worten erfolgt die Klassifizierung der DERs beziehungsweise die Identifizierung der DERs mittels ihrer jeweiligen Lastreihe. Die Erfindung verwendet somit bekannte (historische) Messdaten, das heißt die Lastreihen, zur Identifizierung der DERs. Hierbei können die Lastreihen bevorzugt durch Smartmeter bereitgestellt werden.

Die Erfindung weist wenigstens einen oder mehrere der folgenden Vorteile auf:
- Die Verwendung von Smartmeterdaten führt zu einem effizienten und kosteneffizienten Verfahren, da diese Daten typischerweise bereits verfügbar sind;
- Das Verfahren ist genau und zuverlässig, da zunächst lediglich historische Zeitreihendaten verwendet werden, um den Standort und die Verfügbarkeit flexibler Anlagen zu ermitteln, das heißt diese zu klassifizieren beziehungsweise zu identifizieren;
- Durch das Verfahren können mehrere Anwendungsfälle abgedeckt werden;
- Das Verfahren ermöglicht eine benutzerfreundliche und automatisierte Anwendung zur Anzeige der identifizierten flexiblen Anlagen, beispielsweise für Netzbetreiber;
- Das Verfahren ermöglicht es, den Netzausbau und/oder die Digitalisierungsbemühungen für Stromnetze verbessert zu planen;
- Durch das Verfahren kann die Stabilität und Zuverlässigkeit des Verteilnetzes beziehungsweise des Stromnetzes verbessert werden.

Weiterhin kann das erfindungsgemäße Verfahren ebenfalls durch Energiedienstleistungs-Anbietern (englisch: Energy as a Service; EaaS-Anbieter) verwendet werden. Hierbei kann ermittelt werden, ob sich bestimmte Anlagen beziehungsweise DERs in dem vom EaaS-Anbieter betreuten Gebäude/Standort geändert haben. Eine solche Änderung/Ergänzung von Anlagen, beispielsweise ein Neubau oder Zubau einer Photovoltaikanlage, kann einen neuen Vertrag und/oder weitere technische Maßnahmen erfordern.

Weiterhin verbessert das erfindungsgemäße Verfahren eine Planung eines Netzausbaus, einen Betrieb des Stromnetzes und ermöglicht eine verbesserte Vorhersage für Erneuerbare-EnergieGemeinschaften, Aggregatoren, Anlagen und Netzbetreiber.

Das erfindungsgemäße Verfahren zur Steuerung eines Stromnetzes, wobei an dem Stromnetz ein oder mehrere dezentrale Energieressourcen über einen jeweiligen Netzknoten des Stromnetzes angebunden sind, ist gekennzeichnet dadurch, dass eine Identifikation der technischen Art von einen oder mehreren der Energieressourcen gemäß einem der vorhergehenden Ansprüche 1 bis 10 erfolgt, wobei die Steuerung der elektrischen Leistung an den jeweiligen Netzknoten in Abhängigkeit der am jeweiligen Netzknoten angebundenen und identifizierten technischen Art der jeweiligen Energieressourcen erfolgt.

Es ergeben sich zum erfindungsgemäßen Verfahren gleichartige, gleichwertige und gleichwirkende Vorteile und/oder Ausgestaltungen des erfindungsgemäßen Verfahrens zur Steuerung eines Stromnetzes.

Das erfindungsgemäße Computerprogrammprodukt ist dadurch gekennzeichnet, dass dieses Befehle umfasst, die bei der Ausführung des Programms durch einen Computer diesen veranlassen, das Verfahren und/oder die Schritte des Verfahrens gemäß der Erfindung und/oder einer ihrer Ausgestaltungen auszuführen.

Es ergeben sich zum erfindungsgemäßen Verfahren gleichartige, gleichwertige und gleichwirkende Vorteile und/oder Ausgestaltungen des erfindungsgemäßen Computerprogrammprodukts.

Gemäß einer vorteilhaften Ausgestaltung der Erfindung umfasst die Klassifizierung flexibel steuerbare Anlagen als Klasse.

Mit anderen Worten ist es besonders vorteilhaft, wenn flexibel steuerbare Anlagen, das heißt flexible dezentrale Energieressourcen, innerhalb des Stromnetzes identifiziert werden. Das ist deshalb der Fall, da diese für eine Steuerung des Stromnetzes Flexibilität bereitstellen, sodass gegebenenfalls weniger Regelleistung oder Netzausbaumaßnahmen erforderlich sind und die Netzstabilität verbessert wird.

Das Identifizieren der flexiblen Anlagen erfolgt hierbei dadurch, dass die Klassifizierung die Klasse der flexiblen Anlagen umfasst, das heißt eine Klasse, die mit der technischen Art der flexiblen Anlagen assoziiert ist. Ergänzend kann die Klassifizierung eine Klasse für nicht flexibel steuerbare Anlagen beziehungsweise nicht flexibel steuerbare dezentrale Energieressourcen umfassen.

In einer vorteilhaften Weiterbildung der Erfindung umfasst die Klassifizierung wenigstens die technischen Arten Batteriespeicher, Wärmepumpen, Ladestationen und Photovoltaikanlagen als jeweilige Klasse.

Mit anderen Worten umfasst die Klassifizierung wenigstens vier Klassen. Die Klasse der Batteriespeicher, die Klasse der Wärmepumpen, die Klasse der Ladestationen sowie die Klasse der Photovoltaikanlagen. Wird eine dezentrale Energieressource einer dieser Klassen zugeordnet, so ist diese als Batteriespeicher, als Wärmepumpe, als Ladestation oder als Photovoltaikanlage identifiziert. Weitere Klassen bezüglich weiteren technischen Arten beziehungsweise Ausgestaltungen der dezentralen Energieressourcen können vorgesehen sein.

Gemäß einer vorteilhaften Ausgestaltung der Erfindung werden eine oder mehrere der Lastreihen durch Smartmeterdaten der jeweiligen Energieressource bereitgestellt.

Das ist deshalb von Vorteil, da typischerweise Smartmeterdaten vorhanden und zugänglich sind. Weiterhin weisen Smartmeter eine ID auf, die eindeutig das Energiesystem, beispielsweise ein Gebäude, welches die dezentrale Energieressource umfasst, identifiziert, sodass der Standort der dezentralen Energieressource innerhalb des Stromnetzes dadurch bekannt ist. Mit anderen Worten ist jedes Asset (dezentrale Energieressource) ihrem jeweiligen Smartmeter und somit der Smartmeter ID zugeordnet. Das künstliche neuronale Netz ist somit dazu ausgebildet und trainiert, Muster in den Smartmeterdaten zu erkennen und dadurch die Assets, das heißt die dezentralen Energieressourcen zu identifizieren.

Hierbei kann das Verfahren zur Klassifizierung beziehungsweise Identifizierung mittels einer Rechenvorrichtung durchgeführt werden, die mit den Smartmetern zum Datenaustausch verbunden ist.

Weiterhin kann das Verfahren wenigstens teilweise, insbesondere vollständig, durch ein oder mehrere Smartmeter durchgeführt werden.

Zudem kann das Verfahren gemäß regelmäßiger zeitlicher Abstände ausgeführt beziehungsweise durchgeführt werden.

Dadurch können Änderungen der Infrastruktur, das heißt bezüglich der dezentralen Energieressourcen, erkannt und berücksichtigt werden. Falls nicht ausreichend intelligente Daten verfügbar sind, um beispielsweise Anlagen an einem Endkunden-Netzanschluss zu identifizieren, können ebenfalls ein Ansammeln von Smartmeterdaten, beispielsweise auf der Netzebene von Umspannwerken und/oder Energiegemeinschaften, und/oder berechnete virtuelle Smartmetermessungen, die beispielsweise mittels einer Zustandsschätzung ermittelt wurden, verwendet werden.

In einer vorteilhaften Weiterbildung der Erfindung sind eine oder mehrerer der Lastreihen als Residuallastreihe ausgebildet.

Mit anderen Worten ist es vorteilhaft, die Lastreihen zu verwenden, die den restlichen Energiebedarf der DERs bezüglich Erzeugung oder Verbrauch kennzeichnen. Beispielsweise wird bei einer Photovoltaikanlage ein Teil durch das zugehörige Energiesystem selbst verbraucht und lediglich ein restlicher Anteil der Gesamterzeugung der Photovoltaikanlage in das Stromnetz eingespeist. Die Residuallastreihe dieser Photovoltaikanlage kennzeichnet den nicht selbstverbrauchten und somit den eingespeisten Anteil.

Gemäß einer vorteilhaften Ausgestaltung der Erfindung ist das künstliche neuronale Netz mittels Lastreihen von bekannten Arten von dezentralen Energieressource trainiert.

Mit anderen Worten ist es erforderlich, dass das für das Verfahren verwendete künstliche neuronale Netz entsprechend ausgebildet und entsprechend trainiert ist. Hierbei wird das künstliche neuronale Netz mittels bekannten Lastreihen von bekannten dezentralen Energieressourcen trainiert. Grundsätzlich können hierzu mehrere bekannte Lernverfahren für künstliche neuronale Netze verwendet werden.

In einer vorteilhaften Weiterbildung der Erfindung ist das künstliche neuronale Netz durch ein Verwenden einer binären Kreuzentropie als Verlustfunktion trainiert.

Mit anderen Worten wird zum Training die binären Kreuzentropie als Verlustfunktion verwendet. Dadurch kann vorteilhaferweise die Trainingszeit reduziert werden. Zudem ist das derart trainierte künstliche neuronale Netz schneller, das heißt die Klassifizierung erfolgt in kürzerer Rechenzeit. Dadurch können vorteilhafterweise Rechenressourcen eingespart werden.

Für das Training und die Verwendung des künstlichen neuronalen Netzes ist es grundsätzlich erforderlich seine Aktivierungsfunktion, seine Verlustfunktion, den verwendeten Optimierer sowie seine Ebenen zu spezifizieren.

Somit wird besonders bevorzugt das künstliche neuronale Netz durch ein Verwenden eines statistischen Gradientenverfahrens als Optimierer trainiert.

Dadurch wird vorteilhafterweise ein effizientes Training des neuronalen Netzes ermöglicht.

Weiterhin ist es besonders bevorzugt, wenn das künstliche neuronale Netz eine Eingabeebene für die Eingabedaten, eine Ausgabeebene für die Ausgangsdaten sowie wenigstens zwei verborgene Ebenen, insbesondere genau 2 verborgene Ebenen, aufweist.

Dadurch wird ein besonders vorteilhaftes neuronales Netz bereitgestellt, welches insbesondere zur komplexen Mustererkennung innerhalb der Trainingsdaten und der Smartmeterdaten ausgebildet ist.

Gemäß einer vorteilhaften Ausgestaltung der Erfindung weist das künstliche neuronale Netz als innere Aktivierungsfunktion die Funktion ReLU und als äußere Aktivierungsfunktion die Funktion Sigmoid auf.

Hierbei ist ReLU von Vorteil, da bei einer ausreichend guten Initialisierung keine Nullgradienten auftreten.

Sigmoid ist von Vorteil, da die Ausgabewerte der einzelnen Neuronen der Ausgabeebene als Wahrscheinlichkeit interpretiert werden können, dass eine Eingabe (Lastreihe) zu einer bestimmten Klasse zugehörig ist.

Mit ReLU wird die Funktion ***f*(*z*) = max (0,*z*)** bezeichnet (englisch: Rectifier). Mit Sigmoid wird die Funktion ***f*(*z*) = 1/(1 + exp (-z))** bezeichnet (englisch: Sigmoid Function).

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: ein Stromnetz mit mehreren dezentralen Energieressourcen;
- Figur 2: ein symbolisierte Klassifizierung der dezentralen Energieressourcen des Stromnetzes; und
- Figur 3: ein neuronales Netz zur Klassifizierung von dezentralen Energieressourcen.

Gleichartige, gleichwertige oder gleichwirkende Elemente können in einer der Figuren oder in den Figuren mit denselben Bezugszeichen versehen sein.

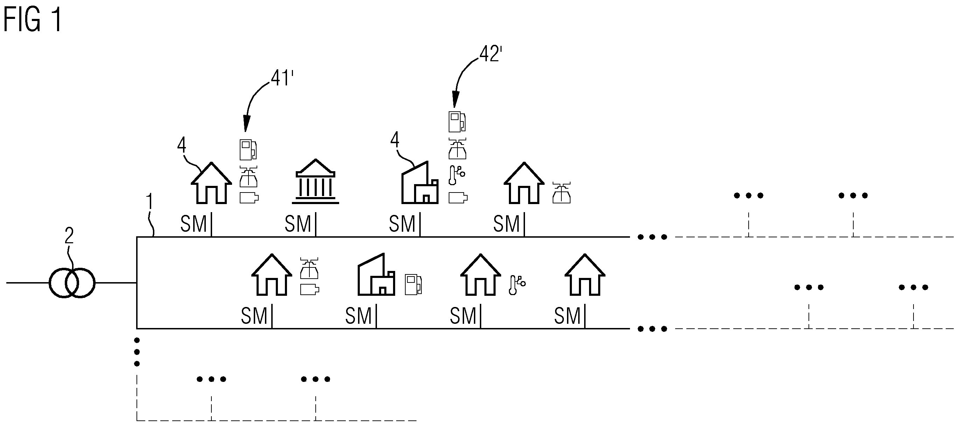

Die Figur 1 zeigt ein Stromnetz 1 mit mehreren dezentralen Energieressourcen 41', 42'.

Das Stromnetz 1 ist insbesondere als Mittelspannungsnetz und/oder Niederspannungsnetz ausgebildet. Weiterhin ist das Stromnetz 1 über einen Transformator 2 an ein übergeordnetes Stromnetz, insbesondere an ein Hochspannungsnetz und/oder Mittelspannungsnetz, angebunden.

Die Figur 1 zeigt mehrere Energiesysteme 4, insbesondere Gebäude, die jeweils eine oder mehrere dezentrale Energieressourcen 41', 42' (DERs) umfassen. Die dezentralen Energieressourcen 41', 42' sind als energietechnische Anlagen einer bestimmten technischen Art ausgebildet, beispielsweise als Photovoltaikanlage, als Batteriespeicher, als Wärmepumpe oder als Ladestation für Elektrofahrzeuge.

Weiterhin weisen die Energiesysteme 4 vorliegend jeweils ein Smartmeter auf, welches in der Figur 1 mit dem Symbol SM gekennzeichnet ist. Hierbei erfassen die Smartmeter wenigstens eine jeweilige Residuallast als Lastreihe.

Mit anderen Worten weist das Stromnetz 1 (Verteilnetz) mehrere Energiesysteme 4 auf, die insbesondere verschiedene technische Arten von flexiblen Anlagen 41', 42', beispielsweise Batteriespeicher, Wärmepumpen, Ladestationen für Elektrofahrzeuge, Photovoltaikanlagen, Elektroheizungen und/oder Klimaanlagen umfassen.

Hierbei können eine oder mehrere der genannten DERs 41', 42' beziehungsweise der genannten flexiblen Anlagen 41', 42' einem Netzbetreiber des Stromnetzes 1 bekannt sein. Diese bekannten DERs sind mit dem Bezugszeichen 41' gekennzeichnet. Mit anderen Worten sind diese bekannten DERs bereits klassifiziert beziehungsweise identifiziert, beispielsweise durch vom Energiesystem 4 bereitgestellten Daten.

Allerdings sind typischerweise nicht alle der DERs 41', 42' bezüglich ihrer technischen Art klassifiziert beziehungsweise identifiziert. Die somit zu klassifizierenden Anlagen sind mit dem Bezugszeichen 42' gekennzeichnet.

Somit umfasst ein Stromnetz 1 typischerweise bereits klassifizierte DERs 41' und zu klassifizierende DERs 42'.

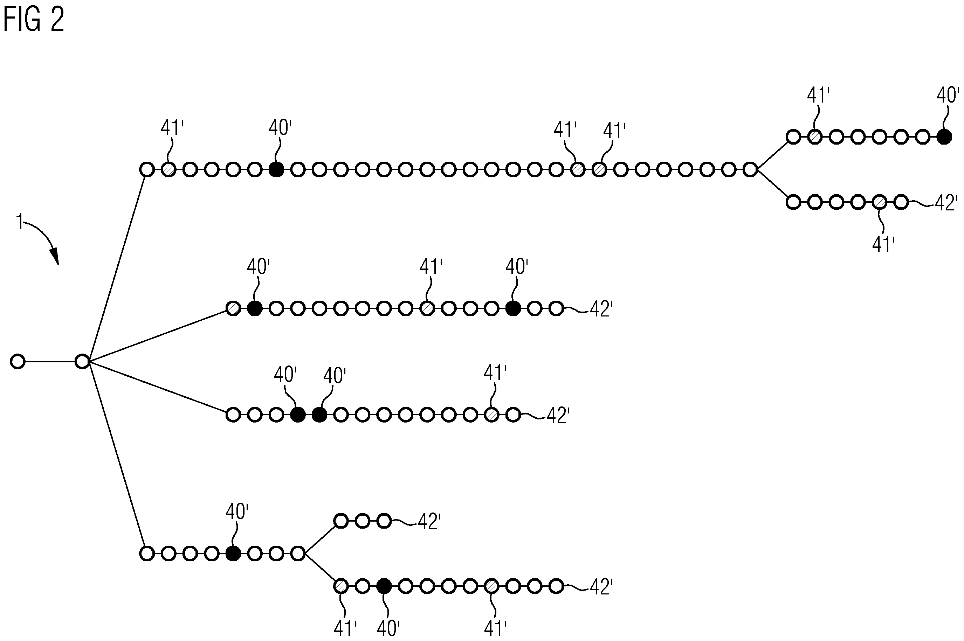

Die Figur 2 zeigt eine symbolisierte Klassifizierung der dezentralen Energieressourcen 41', 42' des Stromnetzes 1 bezüglich einer Klasse, beispielsweise der Klasse von Energiesystemen mit einem Batteriespeicher.

Hierbei wurde das Stromnetz 1 weiter abstrahiert und die einzelnen DERs 41', 42' bezüglich ihrer Klassifizierung/Identifizierung bezüglich der einen Klasse durch jeweilige Schraffuren symbolisiert.

Das Stromnetz 1 umfasst hierbei vergleichbar zur Figur 1, bereits klassifizierte Anlagen 41', zu klassifizierende Anlagen 42' sowie nicht zur betrachteten Klasse zugehörige Anlagen 40'. Die nicht zur betrachteten Klasse zugehörigen Anlagen 40' können jedoch einer weiteren Klasse zugehörig sein. Eine DER kann hierbei der Klasse nicht zugehörig sein, wenn seine Wahrscheinlichkeit für seine Zugehörigkeit zur mit der technischen Art von Anlagen assoziierten Klasse, welche mittels eines künstlichen neuronalen Netzes berechnet wird, kleiner einem festgelegten Schwellenwert ist.

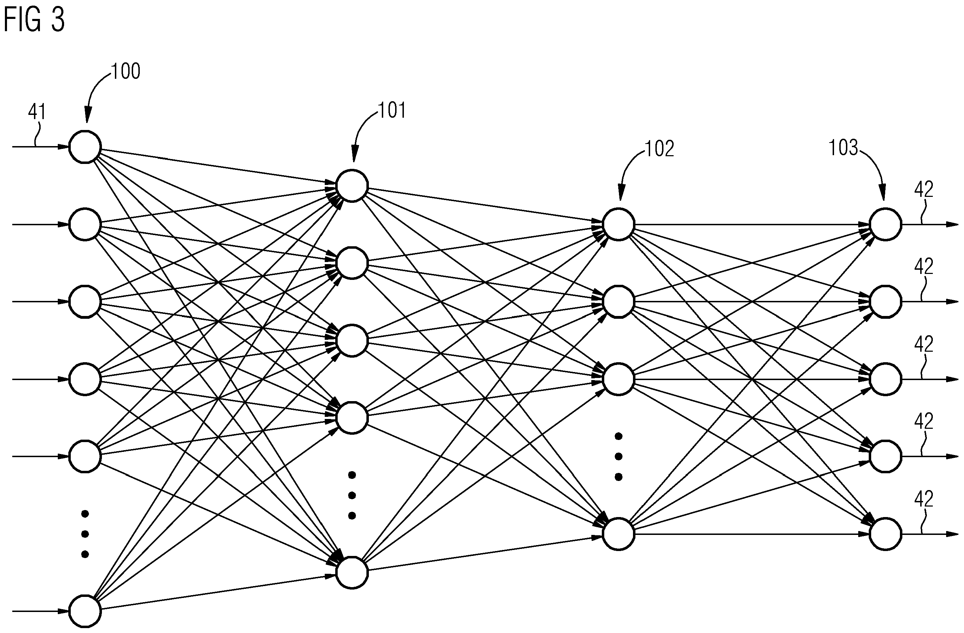

Die Figur 3 zeigt ein künstliches neuronales Netz, welches zur Klassifizierung von DERs ausgebildet und trainiert ist.

Das neuronale Netz weist eine Eingabeebene 100, eine Ausgabeebene 103 sowie zwei verborgene Ebenen 101, 102 auf. Die Eingabeebene 100 ist dazu ausgebildet Lastreihen 41, insbesondere Residuallastreihen, als Eingabedaten aufzunehmen.

Die Ausgabeebene 103 kennzeichnet die Zugehörigkeit einer als Eingabe beziehungsweise Eingabedaten verwendeten Lastreihe 41 zu einer Klasse 42 der Klassifizierung. Hierbei sind mehrere der Klassen 42 mit grundsätzlich möglichen technischen Arten der DERs assoziiert. Die Ausgabedaten geben zusätzlich bevorzugt die Wahrscheinlichkeit an, dass eine Lastreihe 41 zu der ihr zugeordneten Klassen 42 zugehörig ist. Mit anderen Worten werden dadurch die DERs bezüglich ihrer technischen Art beziehungsweise bezüglich ihrer technischen Ausgestaltung identifiziert.

Es wird somit ein künstliches neuronales Netz verwendet, welches trainiert ist, Muster und Eigenschaften der DERs, insbesondere von flexiblen Anlagen, innerhalb von Lastreihen, insbesondere innerhalb von Smartmeterdaten, zu erkennen. Das künstliche neuronale Netz wird mittels eines Datensatzes bereits gekennzeichneter Daten trainiert, der Informationen über die Installation der zu identifizierenden DERs, wie Batterien, Wärmepumpen, Ladegeräte für Elektrofahrzeuge und/oder PV-Systeme mit den entsprechenden Smartmeterdaten umfasst. Das derart trainierte künstliche neuronale Netz kann DERs, insbesondere flexiblen Anlagen, innerhalb neuer Datensätzen/Lastreihen, beispielsweise Smartmeterdaten, mit einer hohen Genauigkeit identifizieren. Hierbei ist es vorteilhaft, wenn die zur Klassifizierung verwendeten Lastreihen/Daten zu den beim Training verwendet Daten vergleichbar sind. Weiterhin ist eine entsprechend große Datenmenge zum Training vorteilhaft. Als Trainingsverfahren kann Semi-Supervised Learning (SSL) bevorzugt verwendet werden.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Stromnetz
- 2: Transformator
- 4: Energiesystem
- 40': nicht zur Klasse zugehörige Energieressource
- 41': klassifizierte Energieressource
- 42': zu klassifizierende Energieressource
- 41: Lastreihe
- 42: Klasse
- 100: Eingabeebene
- 101: verborgene Ebene
- 102: verborgene Ebene
- 103: Ausgabeebene

## Patentansprüche

1. Verfahren zur Klassifizierung von dezentralen Energieressourcen (42') innerhalb eines Stromnetzes (1), wobei die Klassifizierung für eine Steuerung des Stromnetzes (1) vorgesehen ist, wobei die Klassifizierung mehrere festgelegte Klassen (42) aufweist, die mit der technischen Art der jeweiligen dezentralen Energieressource (42') assoziiert sind, und die Klassifizierung durch eine Ermittlung einer Zugehörigkeit der jeweiligen Energieressource (42') zu einer der Klassen (42) erfolgt, wobei für jede der Energieressourcen (42') eine mit der jeweiligen Energieressource (42') assoziierte Lastreihe (41) bereitgestellt wird, **gekennzeichnet dadurch, dass** das Ermitteln der Zugehörigkeit zu einer der Klassen (42) mittels eines künstlichen neuronalen Netzes erfolgt, wobei das künstliche neuronale Netz dazu ausgebildet und trainiert ist, jeweils eine der Lastreihen (41) als Eingabedaten zu verwenden, und aus den Eingabedaten die Zuordnung der jeweiligen als Eingabe verwendeten Lastreihe (41) zu einer der Klassen (42) als Ausgabedaten zu ermitteln.

2. Verfahren gemäß Anspruch 1, **gekennzeichnet dadurch, dass** die Klassifizierung flexibel steuerbare Anlagen als Klasse (42) umfasst.

3. Verfahren gemäß Anspruch 1 oder 2, **gekennzeichnet dadurch, dass** die Klassifizierung wenigstens die technischen Arten Batteriespeicher, Wärmepumpen, Ladestationen und Photovoltaikanlagen als jeweilige Klasse (42) umfasst.

4. Verfahren gemäß einem der vorhergehenden Ansprüche, **gekennzeichnet dadurch, dass** eine oder mehrerer der Lastreihen (41) durch Smartmeterdaten der jeweiligen Energieressource (42') bereitgestellt werden.

5. Verfahren gemäß einem der vorhergehenden Ansprüche, **gekennzeichnet dadurch, dass** eine oder mehrere der Lastreihen (41) als Residuallastreihe ausgebildet sind.

6. Verfahren gemäß einem der vorhergehenden Ansprüche, **gekennzeichnet dadurch, dass** das künstliche neuronale Netz mittels Lastreihen (41) von bekannten Arten von dezentralen Energieressourcen (41') trainiert ist.

7. Verfahren gemäß Anspruch 6, **gekennzeichnet dadurch, dass** das künstliche neuronale Netz durch ein Verwenden einer binären Kreuzentropie als Verlustfunktion trainiert ist.

8. Verfahren gemäß Anspruch 6 oder 7, **gekennzeichnet dadurch, dass** das künstliche neuronale Netz durch ein Verwenden eines statistischen Gradientenverfahrens als Optimierer trainiert ist.

9. Verfahren gemäß einem der vorhergehenden Ansprüche, **gekennzeichnet dadurch, dass** das künstliche neuronale Netz eine Eingabeebene (100) für die Eingabedaten, eine Ausgabeebene (103) für die Ausgangsdaten sowie wenigstens zwei verborgene Ebenen (101, 102), insbesondere genau 2 verborgene Ebenen, aufweist.

10. Verfahren gemäß einem der vorhergehenden Ansprüche, **gekennzeichnet dadurch, dass** das künstliche neuronale Netz als innere Aktivierungsfunktion die Funktion ReLU und als äußere Aktivierungsfunktion die Funktion Sigmoid aufweist.

11. Verfahren zur Steuerung eines Stromnetzes (1), wobei an dem Stromnetz ein oder mehrere dezentrale Energieressourcen (42') über einen jeweiligen Netzknoten des Stromnetzes (1) angebunden sind, **gekennzeichnet dadurch, dass** eine Identifikation der technischen Art von einer oder mehreren der Energieressourcen (42') gemäß einem der vorhergehenden Ansprüche erfolgt, wobei die Steuerung der elektrischen Leistung an den jeweiligen Netzknoten in Abhängigkeit der am jeweiligen Netzknoten angebunden und identifizierten technischen Art (42) der jeweiligen Energieressourcen (42') erfolgt.

12. Verfahren gemäß Anspruch 11, **gekennzeichnet dadurch, dass** die dezentralen Energieressourcen (42') als flexibel steuerbare Anlagen ausgebildet sind.

13. Verfahren gemäß Anspruch 11 oder 12, **gekennzeichnet dadurch, dass** die dezentralen Energieressourcen (42') als Batteriespeicher, Wärmepumpen, Ladestationen oder Photovoltaikanlagen ausgebildet sind.

14. Computerprogrammprodukt, **gekennzeichnet dadurch, dass** dieses Befehle umfasst, die bei der Ausführung des Programms durch einen Computer diesen veranlassen, das Verfahren und/oder die Schritte des Verfahrens gemäß einem der Ansprüche 1 bis 10 auszuführen.
